# FASCICULE DE BREVET EUROPEEN

(11) **EP 0 901 143 B1**
(45) Date de publication et mention de la délivrance du brevet: **25.10.2006**
(21) Numéro de dépôt: 98410095.8
(22) Date de dépôt: 24.08.1998
(51) Int. Cl.: H01H 71/08

(54) **Dispositif d'assemblage et de liaison électrique d'appareils électriques modulaires de puissance tels des disjoncteurs**
Anordnung zum Zusammenbauen und Verbinden elektrischer Leistungsapparatemodule wie Schutzschalter
Device for assembly and connection of electrical power equipment modules such as circuit breakers

(30) Priorité: 05.09.1997 FR 9711411
(43) Date de publication de la demande: 10.03.1999
(73) Titulaire: SCHNEIDER ELECTRIC INDUSTRIES SAS, 92500 Rueil-Malmaison (FR)
(72) Inventeur: Caire, Jean, 38050 Grenoble cedex 09 (FR)
(74) Mandataire: Ritzenthaler, Jacques

(56) Documents cités:
- EP-A- 0 387 158
- EP-A- 0 729 167

## Description

L'invention concerne une combinaison d'un dispositif d'assemblage et de liaison électrique d'appareils modulaires, chaque module renfermant au moins une unité de coupure d'une phase ou du neutre, fixés sur un rail de montage et ayant des boîtiers accolés côte à côte, ledit dispositif comprenant un moyen de raccordement, tel un peigne, de l'ensemble des appareils, s'étendant parallèlement à la direction longitudinale du rail et ayant une série de dents distribuant successivement plusieurs phases 1,2, etc., et ce, de manière répétitive le long du rail, avec une dent distribuant le neutre interposée entre deux dents de phases successives ou bien disposée en regard de chacune des dents de phase, et d'au moins un appareil de puissance comportant des bornes destinées à recevoir les dents dudit peigne.

Actuellement, les peignes de raccordement sont constitués par des barres destinées à véhiculer chacune une phase ou le neutre, s'étendant parallèlement au rail et à partir desquelles s'étendent perpendiculairement auxdites barres, un certain nombre de dents destinées à être introduites dans le cages des bornes des appareils.

On connaît un premier type de peigne constitué uniquement par deux barres véhiculant respectivement une phase et le neutre. Ce peigne comprend ainsi une succession de dents distribuant alternativement la phase et le neutre et est réservé au raccordement de disjoncteurs dits unipolaires et neutres. Il ne peut donc pas être utilisé pour le raccordement d'appareils du type tripolaire, tripolaire et neutre etc.

On connaît un second type de peigne constitué par exemple de quatre barres et présentant une série de dents véhiculant successivement le neutre et trois phase différentes, et ce de manière répétitive le long du rail. Ce peigne est particulièrement adapté au raccordement d'appareils tripolaires et neutres. Cependant, le montage d'un appareil du type unipolaire et neutre à côté d'un disjoncteur tripolaire laisse subsister un espace perdu entre les deux appareils correspondant à deux modules, d'où il résulte un encombrement important de l'ensemble des appareils raccordés. De même, le montage d'un auxiliaire (correspondant à un demi-module) entre deux appareils tripolaires et neutre engendre une espace perdu correspondant à trois modules et demi.

Et l'on connaît un troisième type de peigne constitué par quatre barres véhiculant respectivement le neutre et trois phases différentes, ledit peigne présentant ainsi une série de dents distribuant successivement et de manière répétitive les trois phases, avec interposition d'une dent distribuant le neutre entre deux dents successives distribuant une phase. Or, cette réalisation de peigne permet uniquement le montage d'appareils du type unipolaire et neutre.
Et l'on connaît également le document EP 0387158 décrivant un dispositif d'assemblage d'appareils électriques de puissance et de blocs auxiliaires, le boîtier de chaque bloc auxiliaire comportant des moyens de logement des dents non utilisées du peigne.

La présente invention résout les problèmes précités et propose une combinaison d'un dispositif d'assemblage et de liaison électrique d'appareils modulaires ainsi qu'un appareil modulaire, permettant de réduire à une seule le nombre de références de peignes, de diminuer le volume de certains appareils modulaires tel le tripolaire et neutre, et de diminuer l'encombrement de l'ensemble des appareils sur le rail.

A cet effet, la présente invention a pour objet une combinaison selon la revendication 1.

L'invention a également pour objet un appareil de puissance comportant sur sa face de raccordement, une combinaison de bornes de raccordement et d'emplacements de manière à pouvoir être alimenté et relié électriquement à d'autres appareils du même type par des câbles ou bien par un peigne ayant une série de dents distribuant successivement plusieurs phases 1, 2, etc., et ce, de manière répétitive le long du rail, avec une dent distribuant le neutre interposée entre deux dents de phases successives ou bien disposée en regard de chacune des dents de phase.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue schématique illustrant de face, un ensemble d'appareils de puissance assemblés et reliés électriquement par un dispositif conforme à l'invention,
- les figures 2, 3, et 4 illustrent schématiquement respectivement trois exemples d'applications du dispositif de l'invention,
- la figure 5 illustre schématiquement une disposition selon l'art antérieur,
- la figure 6 illustre en perspective, un ensemble d'appareils reliés par un dispositif conforme à l'invention, avec décalage en profondeur des bornes de phase et de neutre de manière à empêcher un montage décalé le long du rail,
- la figure 7 illustre dans une vue de face, une autre réalisation de l'invention mettant en oeuvre des éléments de connexion extérieurs, et,
- la figure 8 est une vue de dessus, illustrant une autre réalisation de l'invention.

Sur les figures, on voit une pluralité d'appareils électriques modulaires A à savoir des interrupteurs et des disjoncteurs juxtaposés par encliquetage sur un rail support 1, notamment à profil DIN. Les appareils A sont accolés par leurs grandes faces latérales pour former une rangée horizontale s'étendant selon la direction du rail 1.

Chaque appareil modulaire A comporte un boîtier isolant moulé B de forme parallèlépipédique, renfermant le(s) mécanisme(s) de coupure et de protection (non représenté). Les faces latérales opposées étroites 4, 3 du boîtier B sont équipées respectivement de bornes d'entrée 5 et de bornes de sortie 6. Les bornes sont du type à cage à vis de serrage ou autres.

Les bornes d'entrée 5 sont reliées à un peigne de raccordement P agencé pour former un jeu de barres monobloc d'alimentation en parallèle des différents appareils. La liaison électrique du peigne P avec l'appareil de tête 7 s'effectue au moyen d'un connecteur à câble d'alimentation (non représenté). La borne de sortie 6 de chaque appareil A est raccordée par un câble de liaison à un départ (non représenté).

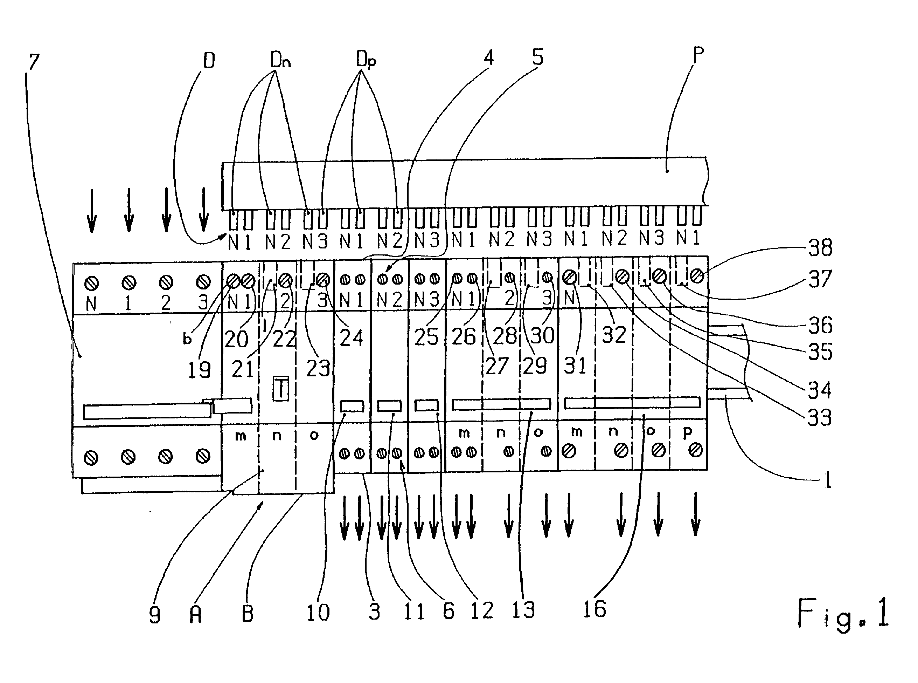

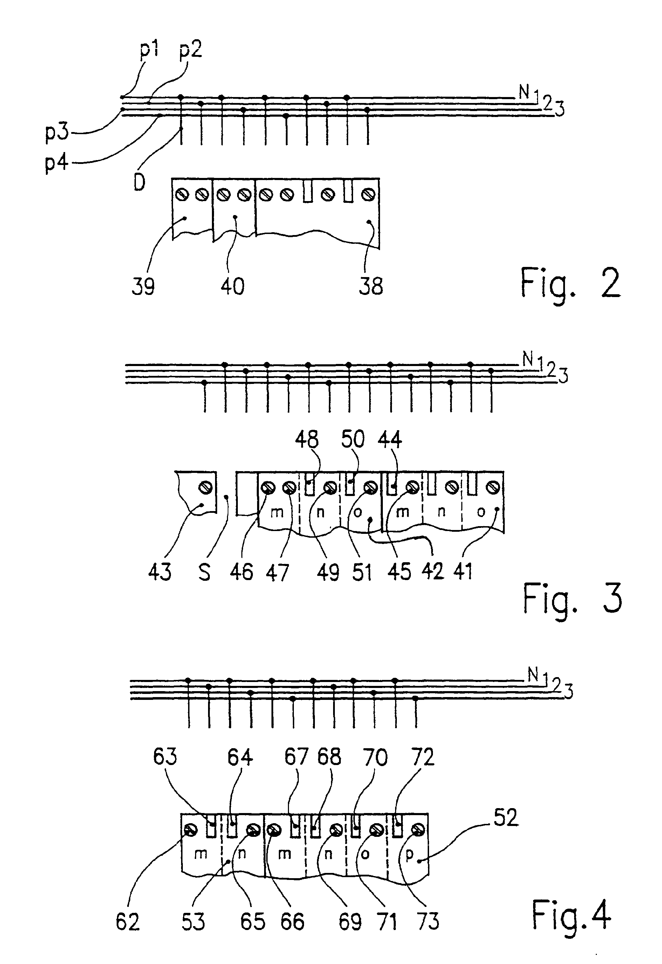

Sur la figure 1, cet ensemble d'appareils A est constitué par, successivement, un interrupteur ou disjoncteur de tête tripolaire et neutre 7 associé à un bloc différentiel 9, trois disjoncteurs unipolaires et neutres 10, 11, 12, un disjoncteur tripolaire et neutre 13 allant jusqu'à 40A et un disjoncteur tripolaire et neutre 16, de plus forte puissance allant au delà de 40A. Le peigne de raccordement P comprend quatre barres conductrices d'alimentation (p1, p2, p3, p4 - fig. 2) véhiculant respectivement le neutre et les trois phases. Chaque barre conductrice p1 à p4 est équipée d'une pluralité de languettes en forme de dents D, destinées à être engagées dans les cages des bornes correspondantes. Ainsi, ce peigne P comprend un ensemble de dents Dph véhiculant successivement les différentes phases 1, 2 et 3, et ce de manière répétitive tout le long du rail 1, avec interposition entre deux dents de phases Dph successives d'une dent Dn véhiculant le neutre.

Conformément à l'invention, chaque appareil de puissance A destiné à être alimenté par le peigne P, comprend une combinaison de bornes de raccordement b et de logements 1, ces derniers étant destinés à recevoir les dents non utilisées. Ainsi, le premier appareil à être raccordé au peigne P, à savoir le bloc différentiel tripolaire et neutre 9 associé à l'appareil de tête 7 comprend successivement une borne 19 pour le neutre, une borne 20 pour la phase 1, un logement 21 pour le neutre, une borne 22 pour la phase 2, un logement 23 pour le neutre et une borne 24 pour la phase 3, et n'est constitué que par trois modules m, n, o de 18 mm. Les trois appareils suivants 10, 11, 12 sont des appareils unipolaires et neutres de type classique et ne seront donc pas décrits plus en détail.

Le cinquième 13 de ces appareils, prévu pour un courant allant jusqu'à 40A, est constitué de trois modules m, n, o de 18mm et comporte successivement une borne pour le neutre 25, une borne 26 pour la phase 1, un logement 27 pour le neutre, une borne 28 de phase 2, un logement 29 pour le neutre, une borne 30 de phase 3. Le suivant 16 de ces appareils, prévu pour un courant allant au delà de 40A, est constitué par quatre modules m, n, o, p de 18mm et comprend sur sa face de raccordement successivement une borne 31 pour le neutre, deux logements 32, 33 pour la phase 1 et le neutre, une borne 34 pour la phase 2, un logement 35 pour le neutre, une borne 36 pour la phase 3, un logement 37 pour le neutre, et une borne 38 pour la phase 1 de nouveau.

Sur la figure 2, est illustrée l'association d'un appareil dit tripolaire et neutre 38 avec deux appareils unipolaires et neutres 39, 40. Comme sur la figure 1, on voit que ce type d'association ne laisse pas subsister d'espace inoccupé entre deux appareils successifs, contrairement à ce qui était le cas lors de l'utilisation d'un peigne tripolaire classique, en combinaison avec un appareil tripolaire et neutre de l'art antérieur (perte de deux modules).

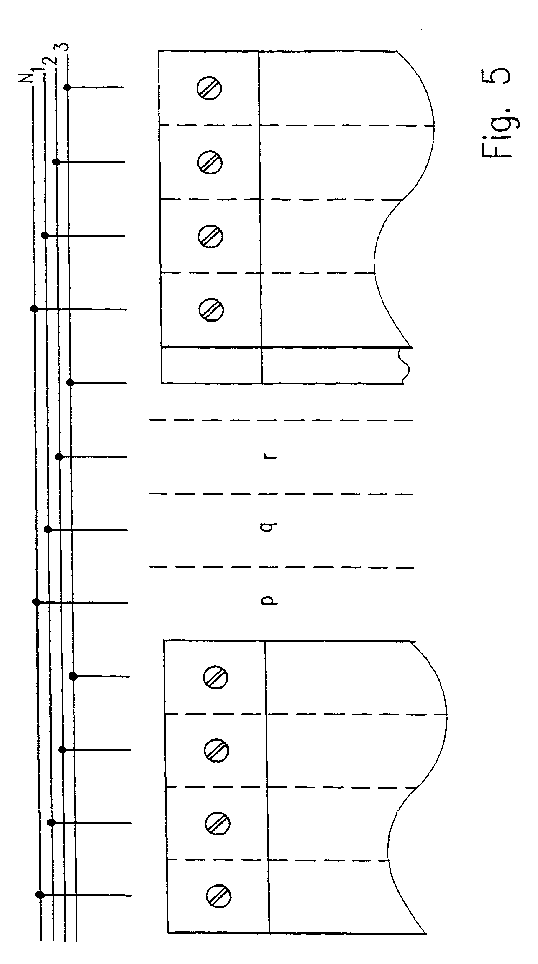

Sur la figure 3, sont associés un disjoncteur tripolaire 41, un disjoncteur tripolaire et neutre avec auxiliaire 42 et un autre appareil 43 dont le type n'est pas précisé. Le premier 41 est constitué par trois modules m, n, o, comprenant chacun un logement 44 et une borne 45, tandis que le second 42 comprend trois modules m, n, o et présente successivement, sur sa face de raccordement, deux bornes 46, 47, un logement 48, une borne 49, un logement 50 et une borne 51. On voit sur cette figure 3 que l'association d'un disjoncteur avec auxiliaire 42 avec un autre appareil 43 engendre un espace perdu S correspondant à seulement un demi module, contre une perte de trois modules et demi p, q, r dans le cas de l'art antérieur (fig. 5).

Sur la figure 4, est représentée l'association d'un disjoncteur tripolaire et neutre 52 en quatre modules, m, n, o, p, avec un disjoncteur unipolaire et neutre 53 en deux modules m, n.

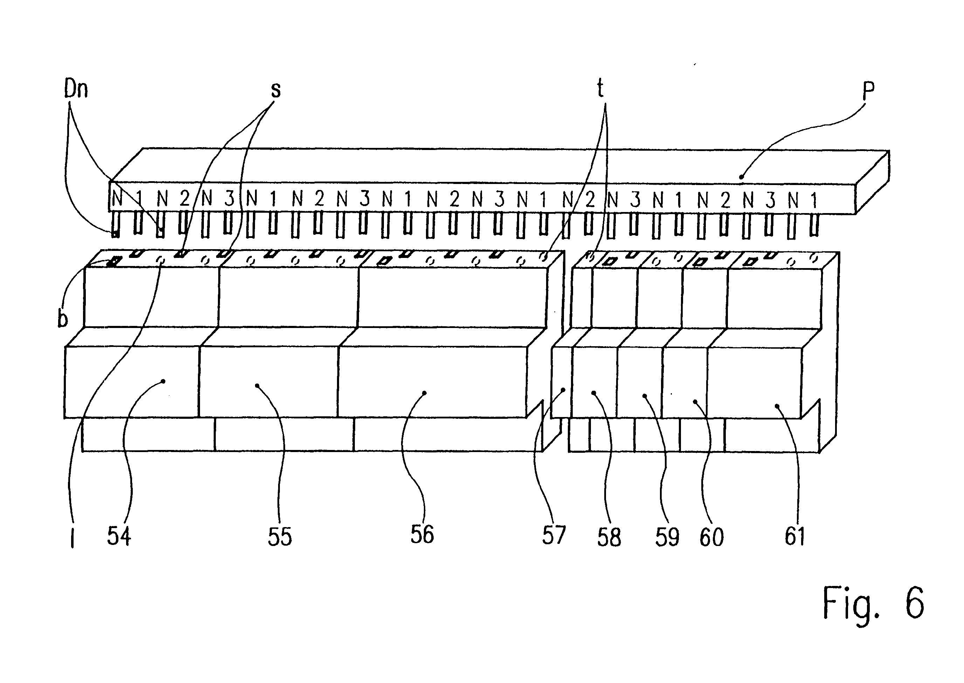

Sur la figure 6, le dispositif de l'invention est utilisé pour un ensemble d'appareils comprenant successivement, un disjoncteur tripolaire et neutre 54, un disjoncteur tripolaire 55, un disjoncteur tripolaire et neutre 56 à différentiel intégré, un auxiliaire dit OFSD 57, un disjoncteur unipolaire et neutre 58, une télécommande 59, et deux disjoncteurs unipolaires et neutres 60, 61 de calibre différents (respectivement 16A et 40A).

Dans cette réalisation, on voit que sur le peigne P aussi bien que sur les appareils A, les bornes b ou logements 1 correspondant au neutre, de même que les dents Dn correspondantes du peigne P ont été décalées dans le sens de la profondeur des appareils A (c'est à dire perpendiculairement au rail), par rapport aux bornes s ou logements t correspondant aux phases. Cette disposition permet d'éviter un montage décalé des dents du peigne dans les bornes des appareils.

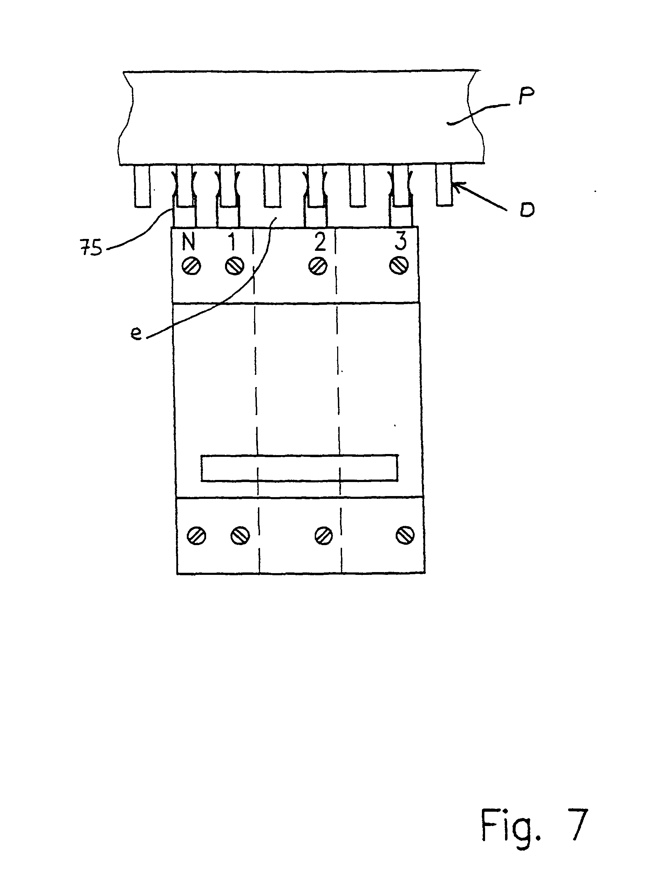

Dans toutes les réalisations précédemment décrites, les bornes comprennent des éléments de connexion internes aux appareils, et les emplacements sont formés par des logements (1) ménagés dans le boîtier desdits appareils. Or, les emplacements peuvent également consister en des espaces libres (e) entre les bornes au niveau des dents non utilisées du peigne, les bornes comprenant alors des pinces de connexion 75 en saillie sur les appareils, comme illustré sur la figure 7.

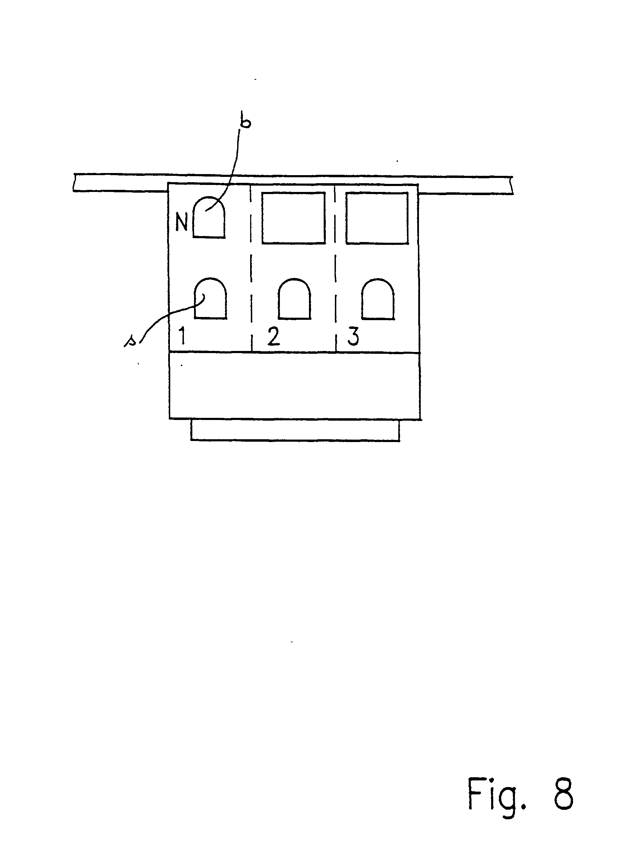

Selon une autre réalisation, chacune des bornes (b) (ou emplacement) associée au neutre, sera placée en regard d'une borne (s) (ou emplacement) associée à une phase, comme illustré sur la figure 8.

On a donc réalisé grâce à l'invention, un dispositif d'assemblage et de liaison électrique permettant d'utiliser une seule référence de peigne pour raccorder plusieurs appareils de types différents, en minimisant l'espace perdu sur le rail et en réduisant le volume de certains appareils, d'où un encombrement réduit de l'ensemble.

Par exemple, il est possible de mixer dans n'importe quel ordre, des appareils de type une phase et neutre, trois phases et trois phases et neutre. Ce dispositif permet en outre de monter des appareils de puissance plus importante nécessitant une largeur supérieure, par exemple un appareil une phase plus neutre 53 en deux modules, trois phases plus neutre 52 en quatre modules etc. Il rend également possible en rénovation, le remplacement d'un disjoncteur trois phases par un appareil trois phases plus neutre de même largeur.

Le montage d'auxiliaires s'effectue en décalant les appareils d'un seul module et le disjoncteur trois phases plus neutre peut être réalisé en trois modules au lieu de quatre actuellement.

Bien entendu, l'invention n'est pas limitée aux modes de réalisation décrits et illustrés donnés uniquement à titre d'exemple. Ainsi, par exemple, d'autre types de technologies de raccordement que les cages à vis pourront être utilisées, par exemple, le raccordement par embrochage.

## Revendications

1. Combinaison des appareils modulaires de puissance (A) avec un dispositif d'assemblage et de liaison électrique d'appareils modulaires de puissance, tel des disjoncteurs, chaque appareil renfermant au moins une unité de coupure d'une phase ou du neutre, fixés sur un rail de montage et ayant des boîtiers accolés côte à côte, ledit dispositif comprenant d'une part, un moyen de raccordement, tel un peigne (l), de l'ensemble des appareils, s'étendant parallèlement à la direction longitudinale du rail et ayant une série de dents (Δn) distribuant successivement plusieurs phases, et ce, de manière répétitive le long du rail, avec une dent distribuant le neutre interposée entre deux dents de phases successives ou bien disposée en regard de chacune des dents de phase et d'au moins un appareil de puissance comportant des bornes destinées à recevoir les dents précitées du peigne, **caractérisée en ce que** chaque appareil de puissance (A) comporte sur sa face raccordement au peigne, une combinaison constituée de bornes de raccordement (b) et d'emplacements (1) lesdites bornes (b) étant destinées à recevoir les dents (D) utilisées et les emplacements (1) les dents non utilisées du peigne (P).

2. Combinaison selon la revendication 1, **caractérisé en ce que** chaque appareil (A) comprenant au moins un module (m, n, o, p), chacun des modules comporte sur sa face de raccordement, une combinaison à deux éléments constituée de bornes (b) et/ou d'emplacements (1), la distance séparant deux dents successives (D) correspondant à un demi-module.

3. Combinaison selon la revendication 1 ou 2, **caractérisé en ce que** la distance entre deux dents successives, correspondant au pas des appareils, est sensiblement de 9 mm.

4. Combinaison selon l'une quelconque des revendications 1 à 3, **caractérisé en ce que** le peigne précité (P) distribue trois phases et le neutre.

5. Combinaison selon l'une quelconque des revendications 1 à 4, **caractérisé en ce que** les dents (Dn) distribuant le neutre ont une position différente dans le sens de la profondeur des appareils (A) par rapport aux dents (Dph) distribuant une phase, de manière à éviter un montage décalé du peigne (P).

6. Combinaison selon l'une quelconque des revendications précédentes, **caractérisé en ce que** les appareils modulaires précités comprennent des disjoncteurs ou interrupteurs (9, 10, 11, 12, 13, 16), différentiels ou non, associés ou non à des blocs auxiliaires (57) et/ou des blocs de commande (59).

7. Combinaison selon l'une quelconque des revendications précédentes, **caractérisé en ce que** chaque module (n, o, p) des appareils renferme une seule unité de coupure d'une phase ou du neutre.

8. Combinaison selon l'une quelconque des revendications 1 à 6, **caractérisé en ce qu'**au moins un module (m) des appareils renferme deux unités de coupure respectivement du neutre et d'une phase.

9. Combinaison selon l'une quelconque des revendications 1 à 8, **caractérisé en ce que** les bornes comprennent des éléments de connexion internes aux appareils, et les emplacements sont formés par des logements (1) ménagés dans le boîtier desdits appareils.

10. Combinaison selon l'une quelconque des revendications 1 à 8, **caractérisé en ce que** les bornes comprennent des éléments de connexion (75) en saillie sur les appareils, et **en ce que** les emplacements comprennent des espaces (e) laissés libres entre les bornes au niveau des dents non utilisées.

11. Appareil de puissance comportant sur sa face de raccordement, une combinaison de bornes de raccordement b et d'emplacements (1), de manière à pouvoir être alimenté et relié électriquement à d'autres appareils (A) du même type soit par des câbles soit par un peigne ayant une série de dents distribuant successivement plusieurs phases, et ce, de manière répétitive le long du rail, avec une dent distribuant le neutre interposée entre deux dents de phases successives ou bien disposée en regard de chacune des dents de phase, les emplacements recevant les dents non utilisées du peigne.

12. Appareil selon la revendication 11, **caractérisé en ce que** c'est un disjoncteur tripolaire (41) et **en ce qu'**il comprend trois modules (m, n, o), lesdits modules comprenant chacun, successivement, d'un coté à l'autre de l'appareil (A) un emplacement (44) et une borne (45).

13. Appareil selon la revendication 11, **caractérisé en ce que** c'est un disjoncteur tripolaire et neutre (38) et **en ce qu'**il comprend trois modules (m, n, o), lesdits modules comprenant successivement d'un côté à l'autre de l'appareil (A), pour le premier (m), deux bornes (46,47), et pour les deux autres (n, o), un emplacement (48, 50) et une borne (49,51).

14. Appareil selon la revendication 11, **caractérisé en ce que** c'est un disjoncteur unipolaire et neutre et **en ce qu'**il comprend deux modules (m, n) comportant sur leur face de raccordement, respectivement, une borne (62) et un emplacement (63) pour le premier (m), et un emplacement (64) et une borne (65) pour le second (n).

15. Appareil selon la revendication 11, **caractérisé en ce que** c'est un disjoncteur tripolaire et neutre (52) et **en ce qu'**il comprend quatre modules (m, n, o, p) lesdits modules comportant successivement d'un côté à l'autre du peigne (P) une borne (66) et un emplacement (67) pour le premier (m) et un emplacement (68, 70, 72) et une borne (69, 71, 73) pour les trois autres modules (n, o, p).

16. Appareil de puissance selon la revendication 11, comprenant au moins un module (m,n,o,p), chacun des modules comportant sur sa face de raccordement, une combinaison à deux éléments constituée de bornes b et/ou d'emplacements (1), la distance séparant deux éléments successifs correspondant à un demi-module.

## Claims

1. Combination of modular power apparatuses (A) with a device for assembly and electrical connection of modular power apparatuses, such as circuit breakers, each apparatus housing at least one breaking unit of a phase or of the neutral, fixed on a support rail and having cases adjoined side by side, said device comprising on the one hand a connecting means, such as a comb (P), for connecting all the apparatuses, extending parallel to the longitudinal direction of the rail and having a series of teeth (Dn) successively distributing several phases in repetitive manner along the rail, with a tooth distributing the neutral interposed between two successive phase teeth or arranged facing each of the phase teeth, and of at least one power apparatus comprising terminals designed to receive the above-mentioned teeth of the comb, **characterized in that** each power apparatus (A) comprises a combination formed by connection terminals (b) and locations (I) on its connection face to the comb, said terminals (b) being designed to receive the used teeth (D) and the locations (I) the unused teeth of the comb (P).

2. Combination according to claim 1, **characterized in that** each apparatus (A) comprising at least one module (m, n, o, p), each of the modules comprises a combination with two elements formed by terminals (b) and/or locations (I) on its connection face, the distance separating two successive teeth (D) corresponding to one half-module.

3. Combination according to claim 1 or 2, **characterized in that** the distance between two successive teeth, corresponding to the pitch of the apparatuses, is appreciably 9 mm.

4. Combination according to any one of the claims 1 to 3, **characterized in that** the above-mentioned comb (P) distributes three phases and the neutral.

5. Combination according to any one of the claims 1 to 4, **characterized in that** the teeth (Dn) distributing the neutral have a different position in the depthwise direction of the apparatuses (A) with respect to the teeth (Dph) distributing a phase, so as to avoid a staggered assembly of the comb (P).

6. Combination according to any one of the foregoing claims, **characterized in that** the above-mentioned modular apparatuses comprise circuit breakers or switches (9, 10, 11, 12, 13, 16), either differential or not, associated or not to auxiliary units (57) and/or control units (59).

7. Combination according to any one of the foregoing claims, **characterized in that** each module (n, o, p) of the apparatuses houses a single breaking unit of a phase or of the neutral.

8. Combination according to any one of the claims 1 to 6, **characterized in that** at least one module (m) of the apparatuses houses two breaking units respectively of the neutral and of a phase.

9. Combination according to any one of the claims 1 to 8, **characterized in that** the terminals comprise connecting elements internal to the apparatuses, and that the locations comprise housings (1) provided in the case of said apparatuses.

10. Combination according to anyone of the claims 1 to 8, **characterized in that** the terminals comprise connecting elements (75) protruding from the apparatuses, and **in that** the locations comprise spaces (e) left free between the terminals at the level of the unused teeth.

11. Power apparatus comprising a combination of connection terminals (b) and locations (I) on its connection face so as to be able to be electrically supplied and connected to other apparatuses (A) of the same type either by cables or by a comb having a series of teeth successively distributing several phases in repetitive manner along the rail, with a tooth distributing the neutral interposed between two successive phase teeth or arranged facing each of the phase teeth, the locations receiving the unused teeth of the comb.

12. Apparatus according to claim 11, **characterized in that** it is a three-pole circuit breaker (41) and that it comprises three modules (m, n, o), said modules each comprising a location (44) and a terminal (45) successively from one side of the apparatus (A) to the other.

13. Apparatus according to claim 11, **characterized in that** it is a three-pole plus neutral circuit breaker (38) and that it comprises three modules (m, n, o), said modules successively comprising from one side of the apparatus (A) to the other, two terminals (46, 47) for the first module (m), and a location (48, 50) and a terminal (49, 51) for the other two modules (n, o).

14. Apparatus according to claim 11, **characterized in that** is a single-pole plus neutral circuit breaker and that it comprises two modules (m, n) comprising on their connection face, respectively, a terminal (62) and a location (63) for the first module (m), and a location (64) and a terminal (65) for the second module.

15. Apparatus according to claim 11, **characterized in that** it is a three-pole plus neutral circuit breaker (52) and that it comprises four modules (m, n, o, p), said modules successively comprising from one side of the comb (P) to the other, a terminal (66) and a location (67) for the first module (m) and a location (68, 70, 72) and a terminal (69, 71, 73) for the other three modules (n, o, p).

16. Power apparatus according to claim 11, comprising at least one module (m, n, o, p), each of the modules comprising on its connection face a combination with two elements formed by terminals (b) and/or locations (l), the distance separating two successive elements corresponding to a half-module.

## Patentansprüche

1. Kombination modularer Leistungs-Schaltgeräte (A) mit einer Einrichtung zum Aneinanderbau und zur elektrischen Verbindung von modularen Leistungs-Schaltgeräten, wie zum Beispiel von Leistungsschaltern, die auf einer Tragschiene befestigt sind und seitlich aneinander gereihte Gehäuse aufweisen, wobei jedes Schaltgerät mindestens eine Schalteinheit zur Abschaltung eines Phasenleiters oder des Neutralleiters enthält und die genannte Einrichtung einerseits ein Mittel zum Anschluss aller Schaltgeräte, wie zum Beispiel eine parallel zur Längsrichtung der Tragschiene verlaufende Kammschiene (P) mit mehreren Zähne (Dn) umfasst, die nacheinander mehrere Phasen verteilen, und dies mehrfach entlang der Tragschiene, wobei jeweils ein Zahn zur Verteilung des Neutralleiters zwischen zwei aufeinander folgenden Phasenleiterzähnen oder geradlinig gegenüber jedes Phasenleiterzahns angeordnet ist, sowie mindestens ein Leistungs-Schaltgerät mit Klemmen, die zur Aufnahme der genannten Zähne der Kammschiene dienen, **dadurch gekennzeichnet, dass** jedes Leistungsschaltgerät (A) auf seiner zum Anschluss an die Kammschiene vorgesehenen Seite eine Kombination aus Anschlussklemmen (b) und Einsatzstellen (1) aufweist, wobei die genannten Klemmen (b) zur Aufnahme der verwendeten Zähne (D) und die Einsatzstellen (1) zur Aufnahme der nicht verwendeten Zähen der Kammschiene (P) dienen.

2. Kombination nach Anspruch 1, **dadurch gekennzeichnet, dass** jedes Schaltgerät (A) mindestens ein Modul (m, n, o, p) umfasst und jedes dieser Module auf seiner Anschlussseite eine Kombination aus zwei Elementen aufweist, die aus Klemmen (b) und /oder Einsatzstellen (1) bestehen, wobei der Abstand zwischen zwei aufeinander folgenden Zähnen (D) einer halben Modulbreite entspricht.

3. Kombination nach Anspruch 1 oder 2, **dadurch gekennzeichnet, dass** der Abstand zwischen zwei aufeinander folgenden Zähnen, entsprechend der Modulbreite der Schaltgeräte etwa 9 mm beträgt.

4. Kombination nach irgendeinem der Ansprüche 1 bis 3, **dadurch gekennzeichnet, dass** die genannte Kammschiene (P) drei Phasenleiter und den Neutralleiter verteilt.

5. Kombination nach irgendeinem der Ansprüche 1 bis 4, **dadurch gekennzeichnet, dass** die Zähne (Dn) zur Verteilung des Neutralleiters in der Tiefe der Schaltgeräte (A) gesehen in einer anderen Ebene angeordnet sind als die Zähne (Dph) zur Verteilung der Phasenleiter, um eine versetzte Montage der Kammschiene (P) zu verhindern.

6. Kombination nach irgendeinem der vorhergehenden Ansprüche, **dadurch gekennzeichnet, dass** die genannten modularen Schaltgeräte Leistungsschalter oder Lastschalter (9, 10, 11, 12, 13, 16), mit oder ohne Differenzstromblock sowie mit oder ohne zugeordnete Hilfsblöcke (57) und/oder Steuerblöcke (59) umfassen.

7. Kombination nach irgendeinem der vorhergehenden Ansprüche, **dadurch gekennzeichnet, dass** jedes Modul (n, o, p) der Schaltgeräte nur eine Schalteinheit zur Abschaltung eines Phasenleiters oder des Neutralleiters enthält.

8. Kombination nach irgendeinem der Ansprüche 1 bis 6, **dadurch gekennzeichnet, dass** mindestens ein Modul (m) der Schaltgeräte zwei Schalteinheiten zur Abschaltung des Neutralleiters und eines Phasenleiters enthält.

9. Kombination nach irgendeinem der Ansprüche 1 bis 8, **dadurch gekennzeichnet, dass** die Klemmen schalterinterne Verbindungselemente umfassen und die Einsatzstellen durch im Gehäuse der genannten Schaltgeräte ausgebildete Aufnahmen (1) gebildet werden.

10. Kombination nach irgendeinem der Ansprüche 1 bis 8, **dadurch gekennzeichnet, dass** die Klemmen aus den Schaltgeräten herausstehende Verbindungselemente (75) umfassen und dass die Einsatzstellen in Höhe der nicht verwendeten Zähne als Lücken (e) zwischen den Klemmen ausgebildet sind.

11. Leistungsschaltgerät, das an seiner Anschlussseite eine Kombination aus Klemmen (b) und Einsatzstellen (1) umfasst, derart dass es entweder über Kabel oder über eine Kammschiene mit mehreren Zähnen eingespeist und mit anderen Schaltgeräten (A) des gleichen Typs verbunden werden kann, wobei die Zähne mehrere aufeinander folgende Phasenleiter verteilen, und dies mehrfach entlang der Tragschiene, und ein Zahn zur Verteilung des Neutralleiters zwischen zwei aufeinander folgenden Phasenleiterzähnen oder geradling gegenüber jedes Phasenleiterzahns angeordnet ist und die Einsatzstellen die nicht verwendeten Zähne der Kammschiene aufnehmen.

12. Schaltgerät nach Anspruch 11, **dadurch gekennzeichnet dass** es sich um einen dreipoligen Leistungsschalter (41) handelt und dass er drei Module (m, n, o) umfasst, welche Module jeweils von einer Seite des Schaltgeräts (A) zur anderen nacheinander eine Einsatzstelle (44) und eine Klemme (45) umfassen.

13. Schaltgerät nach Anspruch 11, **dadurch gekennzeichnet dass** es sich um einen dreipoligen Leistungsschalter (38) mit Neutralleiter handelt und dass er drei Module (m, n, o) umfasst, welche Module von einer Seite des Schaltgeräts (A) zur anderen zwei Klemmen (46, 47) am ersten Modul (m) und jeweils eine Einsatzstelle (48, 50) und eine Klemme (49, 51) an den beiden anderen Modulen (n, o) umfassen.

14. Schaltgerät nach Anspruch 11, **dadurch gekennzeichnet, dass** es sich um einen einpoligen Leistungsschalter mit Neutralleiter handelt und dass es zwei Module (m, n) umfasst, die an ihrer Anschlussseite eine Klemme (62) und eine Einsatzstelle (63) am ersten Modul (m) sowie eine Einsatzstelle (64) und eine Klemme (65) am zweiten Modul (n) umfassen

15. Schaltgerät nach Anspruch 11, **dadurch gekennzeichnet, dass** es sich um einen dreipoligen Leistungsschalter mit Neutralleiter (52) handelt und dass es vier Module (m, n, o, p) umfasst, welche Module von einer Seite zur anderen der Kammschiene (P) eine Klemme (66) und eine Einsatzstelle (67) am ersten Modul (m) sowie eine Einsatzstelle (68, 70, 72) und eine Klemme (69, 71, 73) an den drei anderen Modulen (n, o, p) umfassen.

16. Leistungsschaltgerät nach Anspruch 11 mit mindestens einem Modul (m, n, o, p), wobei jedes der Module auf seiner Anschlussseite eine Kombination aus zwei Elementen aufweist, die aus Klemmen (b) und/oder Einsatzstellen (1) bestehen, wobei der Abstand zwischen zwei aufeinander folgenden Elementen einer halben Modulbreite entspricht.
